# EUROPÄISCHE PATENTANMELDUNG

(11) **EP 1 379 073 A1**
(43) Veröffentlichungstag der Anmeldung: **07.01.2004**
(21) Anmeldenummer: 02014721.1
(22) Anmeldetag: 03.07.2002
(51) Int. Cl.: H04N 1/387

(54) **Bildaufnahmeverfahren für ein Panoramabild**

(71) Anmelder: SIEMENS AKTIENGESELLSCHAFT, 80333 München (DE)
(72) Erfinder: Jamwal, Ankit, 81669 Muenchen (DE); Simon, Markus, 81673 Muenchen (DE)

(57) **Zusammenfassung**

Die Erfindung betrifft ein Bildaufnahmeverfahren zur Gewinnung eines Panoramabildes mit einer Kamera, die einen Suchereinrichtung aufweist, wobei eine Folge von überlappenden Einzelbildern zu dem Panoramabild zusammengesetzt wird. Erfindungsgemäß wird zur grafischen Unterstützung in die Suchereinrichtung das jeweils zuvor aufgenommene Bild, um einen vorgegebene Wert in Aufnahmerichtung des Panoramabildes versetzt, eingeblendet.

## Beschreibung

Die Erfindung betrifft ein Verfahren gemäß dem Oberbegriff des Patentanspruchs.

Der durch Kamera und Objektiv vorgegebene Raumwinkel, der durch ein Bild abgetastet beziehungsweise aufgenommen wird, reicht in vielen Situationen nicht aus, um Objekte aus der Umgebung vollständig zu erfassen. Die Verwendung besonders weitwinkliger Objektive zur vollständigen Aufnahme der 0bjekte ist nicht immer möglich und auch nicht immer gewünscht. Ein sehr weitwinkliges Objektiv verursacht durch die Eigenschaften der Linse extreme Verzerrungen in den Bildrandbereichen, die den Eindruck in einem erheblichen Maße stören. Außerdem wird die Qualität der 0bjektdarstellung durch die limitierte Sensorauflösung gestört. In vielen Fällen ist aber auch das Austauschen der Linse / des Objektives nicht möglich, weil diese Komponente fest mit der Kamera integriert ist.

Bei der Generierung eines Panoramabildes werden sich überlappende Einzelbilder zu einem Gesamtbild zusammengesetzt. Die Qualität des Panoramabildes hängt größtenteils davon ab, ob die benachbarten Bilder mit einem geeigneten Überlapp aufgezeichnet wurden. Der Benutzer muss typischerweise den geeigneten Überlapp von Bild zu Bild selber identifizieren, was eine hohe Konzentration des Benutzers verlangt.

Der Erfindung liegt die Aufgabe zugrunde, die Erstellung der zur Generierung eines Panoramabildes notwendigen Einzelbilder mit einem geeigneten Bildüberlapp für den Benutzer zu vereinfachen.

Diese Aufgabe wird erfindungsgemäß durch die im Patentanspruch angegebenen Merkmale gelöst.

Im Folgenden wird die Erfindung anhand eines Ausführungsbeispieles beschrieben. Dabei zeigen:
Figur 1 ein Sucherbild bei einer Erstaufnahme,
Figur 2 das Sucherbild mit einem aktuellen Bild und dem überlagerten Vorgängerbild (Prinzipdarstellung),
Figur 3 das Sucherbild mit einem aktuellen Bild einer bewegten Kamera und dem überlagerten Vorgängerbild (schlechte Übereinstimmung zwischen den aufeinanderfolgenden Rahmen), und
Figur 4 das Sucherbild mit einem aktuellen Bild einer bewegten Kamera und dem überlagerten Vorgängerbild (gute Übereinstimmung zwischen den aufeinanderfolgenden Rahmen).

Wie einleitend schon ausgeführt, müssen die Einzelbilder, die zu einem Panoramabild zusammengesetzt werden sollen, einen genügend großen und zueinander passenden Überlapp aufweisen. Wenn die Bildfolge beispielsweise mit einer mobilen Kamera beziehungsweise einem Videohandy aufgenommen wird, so ist es für den Benutzer schwierig, beispielsweise bei einem Blick durch den Sucher diesen Überlapp zwischen den aufeinanderfolgenden Bildern korrekt einzustellen. Eine Möglichkeit besteht für den Benutzer darin, sich ein markantes Objekt auf der rechten Seite zu merken und diese Aufnahme zu machen. Der Benutzer muss dieses Objekt für die folgende Aufnahme im linken beziehungsweise rechten gegenüberliegenden Bereich des Suchers positionieren.

Bei diesen Ausführungen wird eine Kamera oder eine sonstige vorzugsweise mobile Bildaufnahmeeinrichtung verwendet, die einen an sich bekannten Sucher oder eine Anzeigeeinrichtung zur Wiedergabe des aktuell vom Objektiv erfassten Bildbereiches aufweist.

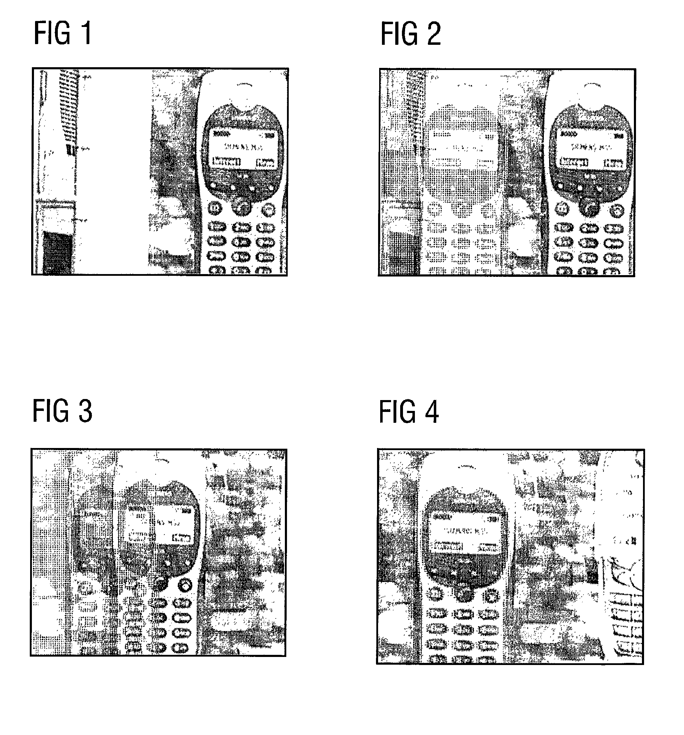

Bei dem erfindungsgemäßen Bildaufnahmeverfahren wird zur grafischen Unterstützung in die Suchereinrichtung das jeweils zuvor aufgenommene Bild (siehe Figur 1) um einen vorgegebene Wert in Aufnahmerichtung des Panoramabildes versetzt eingeblendet (siehe Figur 2). Bei einer Schwenkbewegung nach rechts wird hierbei ein 0bjektbereich rechts im Sucher des Vorgängerbildes in den linken Bereich des Suchers für die nachfolgende aktuelle Aufnahme eingeblendet.

Für den Aufnahmeprozess der Einzelbilder zur Generierung des Panoramabildes bewegt der Benutzer die Kamera beispielsweise horizontal über den aufzunehmenden Bildbereich beziehungsweise Landschaftsbereich. Zur Verdeutlichung ist in den Figuren 1 bis 4 ein Hintergrund dargestellt und für Markierungszwecke ein Handy.

Um zwischen zwei aufeinanderfolgenden Aufnahmen einen korrekten Überlapp einzustellen (siehe Figuren 3 und 4), wird sozusagen eine grafisch unterstützte Positionsabschätzung durchgeführt. Alternativ zur grafischen Positionsabschätzung kann auch ein zur Bewegungsschätzung implementierter Bildverarbeitungsalgorithmus verwendet werden, der in Echtzeit den Schwenk des Benutzers registriert und an geeigneten Kamerapositionen jeweils Bildern aufzeichnet, die untereinander einen optimalen Bildversatz aufweisen. Als Ergebnis dieser autonomen Aufzeichnung erhält man eine Folge von Bildern, die sich besonders gut zur Panoramabildgenerierung eignen.

Ausgehend von einem Sucherbild gemäß Figur 1 wird durch eine Schwenkbewegung der Kamera nach rechts die Position für das nächste Bild gesucht. Dabei wird sozusagen als Merkhilfe beziehungsweise Information das Handy auf der rechten Seite verwendet. Beim Schwenk wandert das Handy in den linken Sucherbereich.

Diese Information wird benutzt, um die Kameraposition für einen korrekten Überlapp einzustellen. In Figur 3 ist der Fall einer nicht korrekten Einstellung des Überlapp und in Figur 4 der Fall einer korrekten Einstellung dargestellt. An der korrekten Position wird das folgende Bild aufgenommen und abgespeichert.

Die Einzelbildfolge wird dann, jeweils mit einem korrekten Überlapp zwischen den einzelnen Bildern, zu dem gesamten Panoramabild zusammengesetzt.

## Patentansprüche

1. Bildaufnahmeverfahren zur Gewinnung eines Panoramabildes mit einer Kamera, die einen Suchereinrichtung aufweist, wobei eine Folge von überlappenden Einzelbildern zu dem Panoramabild zusammengesetzt wird,
**dadurch gekennzeichnet dass**
zur grafischen Unterstützung in die Suchereinrichtung das jeweils zuvor aufgenommene Bild um einen vorgegebene Wert in Aufnahmerichtung des Panoramabildes versetzt eingeblendet wird.
